# EUROPEAN PATENT APPLICATION

(11) **EP 2 045 113 A2**
(43) Date of publication of application: **08.04.2009**
(21) Application number: 08075796.6
(22) Date of filing: 01.10.2008
(51) Int. Cl.: B60K 25/00

(54) **Hybrid apparatus for transmitting motive power to a driven shaft**

(30) Priority: 03.10.2007 IT MI20071893
(71) Applicant: Baruffaldi S.p.A., Tribiano (MI) (IT)
(72) Inventor: Boffelli, Piercarlo, 20067 Tribiano (MI) (IT); Bellotti, Claudio, 20067 Tribiano (MI) (IT); Depoli, Erminio, 20067 Tribiano (MI) (IT); Natale, Fabio, 20067 Tribiano (MI) (IT)
(74) Representative: Raimondi, Margherita

(57) **Abstract**

Apparatus for transmitting motive power from a combustion engine (M) or from an electric generator/motor (60) to a driven shaft (5) coupled to a rotating device (50), comprising a main shaft (2), the opposite ends of which are respectively connected to the combustion engine (M) by means of a first engaging/disengaging device (100; 1100) and to the driven shaft (5) by means of a second engaging/disengaging device (300), said shaft (2) having, mounted thereon, a first electromagnetic clutch (200), the rotor (220) of which is able to receive motive power from a secondary shaft (6) which is connected to the motor/generator (60), the main shaft (2) being provided with a pulley (3) carrying a drive belt (3a) which is endlessly wound onto a second pulley (4) mounted idle on said secondary shaft (6) and able to transmit motive power to the generator/motor (60) via an engaging/disengaging device (400).

## Description

The present invention relates to a hybrid apparatus for transmitting motive power to a driven shaft.

It is known in the technical sector relating to the transmission of motive power to rotating devices that there exists the need to perform rotation of the associated shafts by means of hybrid apparatus which are, for example, operated by a combustion engine or an electric motor.

This need arises for example with regard to the activation, in vehicles, of the air-conditioning compressors which, during normal day-time travel, may be operated by means of a drive connected to the combustion engine, but which also need to be operated during night-time stoppages when the engine is switched off; in this case it is required to have an electric generator/motor connected to batteries and able to cause rotation of the shaft operating the compressor without, however, interfering with the combustion engine, when the latter is running.

The technical problem which is posed, therefore, is to provide a hybrid transmission apparatus able to perform rotation of a driven shaft, drawing power either from a combustion engine or from an electric motor.

In connection with this problem it is also required that this apparatus should be able to charge electric batteries which in turn must power the electric motor when the combustion engine is switched off.

In addition it is required that the apparatus should have compact dimensions, be easy and inexpensive to produce and assemble and if necessary be able to be applied also to already existing devices.

These results are obtained according to the present invention by an apparatus for transmitting motive power from a combustion engine or an electric generator/motor to a driven shaft which is connected to a rotating device according to the characteristic features of Claim 1.

Further details may be obtained from the following description of a non-limiting example of embodiment of the subject of the present invention provided with reference to the accompanying drawings in which:
- Figure 1 shows a schematic cross-section along a longitudinal/vertical plane of the apparatus according to the present invention; and

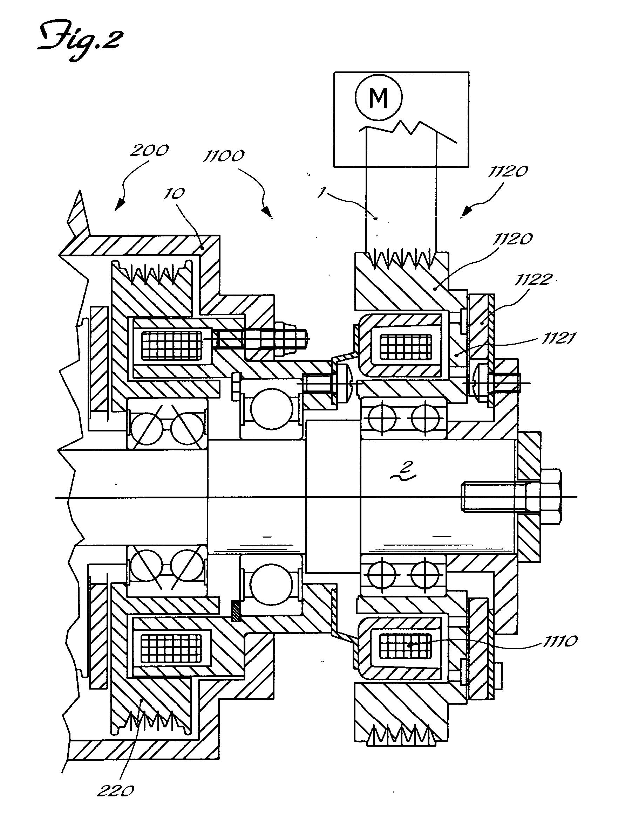

- Figure 2 shows an alternative example of embodiment of the device for connecting the apparatus to the combustion engine.

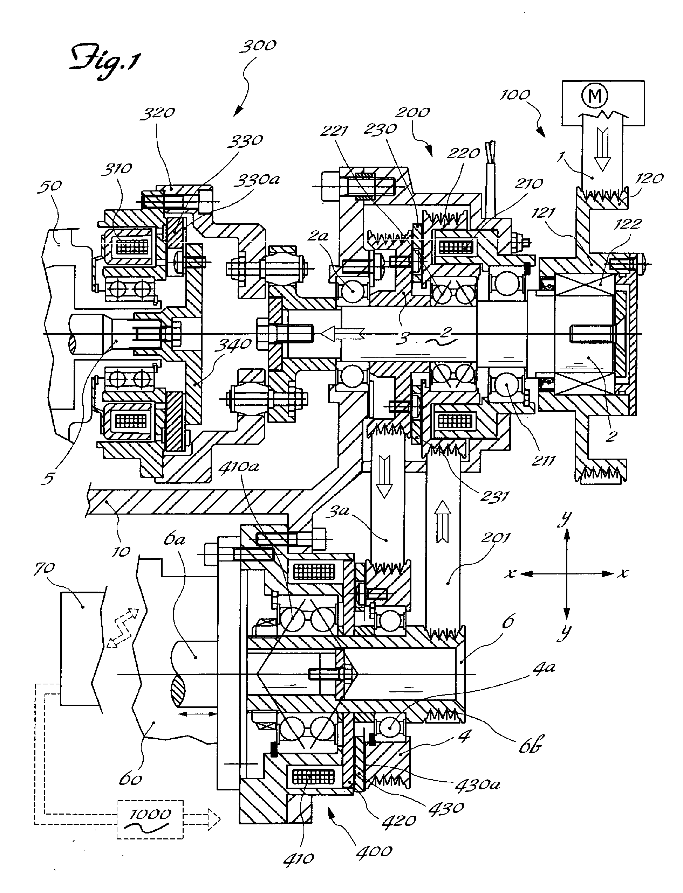

As shown in Fig. 1 and assuming solely for the sake of convenience of the description and without a limiting meaning a pair of reference axes in the longitudinal direction X-X and transverse direction Y-Y, respectively, as well as a front part corresponding to the part for connecting the auxiliary devices and a rear part opposite to the front part, the hybrid apparatus for transmitting the motive power from a main shaft 2 to a driven shaft 5 comprises a fixed structure 10 having, mounted thereon, a bearing 2a which is keyed onto the main shaft 2 which may be rotationally operated by a combustion engine M or by an electric motor which is schematically denoted by 60 with the associated shaft 6a connected in the longitudinal direction to a shaft 6 which is mounted on a bearing 410a which is in turn rigidly coupled with the fixed structure 10.

In greater detail the motor M is connected to the shaft 2 by means of a belt 1 which is endlessly wound around a pulley 120 which is integral with the outer ring 121 of a free release mechanism 100 which also comprises a free wheel 122 which is arranged between the outer ring 121 and the shaft 2 so that up to a certain speed of rotation the driven shaft 2 receives motive power from the pulley 120, while beyond said speed the free release device prevents transmission of the motive power back to the belt 1 as will be understood more clearly below.

The shaft 2 has, mounted thereon after the free release device 100, a first clutch 200 of the electromagnetic type comprising a fixed electromagnet 210 mounted between the structure 10 and a bearing 211 which is keyed onto the shaft 2, there being arranged, concentrically with the electromagnet 210, a pulley 220 forming the rotor of the clutch and carrying a belt 201 which is endlessly wound onto a pulley 6b formed on a shaft 6 parallel to the longitudinal direction X-X.

The clutch 200 also comprises an armature 230 which is connected via a resilient membrane 231 to a third pulley 3 which is rotationally locked to the shaft 2 and which carries a belt 3a endlessly wound onto a pulley 4 mounted onto a bearing 4a which is keyed onto the said shaft 6.

The end of the shaft 2 opposite to that of the free release device has, mounted thereon, an ON/OFF clutch 300 of the electromagnetic type, comprising a fixed electromagnet 310, a rotor 320 connected to the shaft 2 operated by the apparatus, an armature 330 connected to a disk 340 via a resilient membrane 330a able to allow displacement in the longitudinal direction of the armature, while preventing relative rotation.

The armature 330 is recalled against the rotor 320 by excitation of the electromagnet 310.

The disk 340 can be axially coupled to a driven shaft 5 to be rotated and forming part of a rotating device 50 which may, for example, be formed by the air-conditioning compressor of a vehicle.

The armature 430 of an electromagnetic clutch 400 is connected to the pulley 4 of the secondary shaft 6 via a resilient membrane 430a, said clutch comprising a rotor 420 integral with the said shaft 6 and an annular electromagnet 410 which is mounted on a bearing 410a keyed onto the secondary shaft 6.

As shown, the shaft 6 is extended in the longitudinal direction beyond the fixed structure 10 by a section 6a forming the shaft of a rotating device 60 which may consist of an electric motor connected to a battery 70.

With such a configuration the operating principle of the hybrid transmission apparatus and the associated rotating devices connected to it is as follows:

### COMPRESSOR SWITCHED ON/OFF BY COMBUSTION ENGINE

The shaft 5 of the compressor 50 is normally at a standstill since the electromagnetic clutch 300 is kept disengaged so that rotation of the shaft 2 performed by the combustion engine M is not transmitted to the compressor.

If it is required to activate the compressor it is sufficient to excite the electromagnet 310 of the clutch 300 so as to recall the armature 330 and transmit the motive power from the main shaft 2 to the driven shaft 5 and therefore to the compressor 50 which starts to operate.

### BATTERY CHARGING

Independently of operation of the compressor 50 it is possible to charge the batteries 70 by means of the electric motor 60 which operates in this case as a generator and is rotated by the belt 3a endlessly wound onto the pulleys 3 and 4 and as an engaging device for the clutch 400 which, exciting the electromagnet 410, recalls the armature 430 against the rotor 420 which is integral with the shaft 6 and is thus rotated together with the extension 6a of the generator 60.

A control unit 1000 is able to detect when the batteries 70 are fully charged and deactivate the control circuit of the electromagnet 410 so as to separate the armature 430 and reset the shaft 6 to the idle condition.

### COMPRESSOR SWITCHED ON/OFF BY ELECTRIC MOTOR

If powering of the compressor 50 independently of the combustion engine M is required, it is possible to cause rotation of the main shaft 2 by means of the secondary shaft 6.

In this case the batteries 70 power the electric motor 60 which causes rotation of the shaft 6a,6 which, via its pulley 6b and the respective belt 201, causes rotation of the rotor 220 mounted on the bearing 221 of the shaft 2.

Recall of the armature 230 by means of excitation of the electromagnet 210 of the clutch 200 causes rotation of the pulley 3 which imparts motive power to the shaft 2, said motive power being able to be transmitted to the shaft 5 via the clutch 300 as already described further above.

It is therefore clear how the hybrid transmission apparatus according to the present invention allows operation of the driven shaft 5 of a rotating device by means of a combustion engine M or, alternately, by means of an electric motor 60 which is powered by batteries 70, the apparatus also being able to perform recharging of the batteries by means of the combustion engine independently of operation of the driven shaft 5.

In order to limit the size of the electric motor 60 while maintaining the torque necessary for operating the driven shaft 5 of the rotating device (compressor) connected thereto and to be operated, it is envisaged providing a reduction gear between the pulley 6b of the shaft 6 operated by the electric motor 60 and the pulley 220 mounted on the main shaft 2, in order to reduce the number of revolutions transmitted by the electric motor, resulting in the greater torque required without altering the dimensions of the electric motor.

It is envisaged, moreover, that the connection between the main shaft 2 and the combustion engine may be performed by means of an electromagnetic clutch 1120 instead of via the free release device 120.

The clutch 1120 comprises an electromagnet 1110, a rotor 1121 integral with the pulley 1120 actuated by the belt 1 of the combustion engine M, and an armature 1122 which can be recalled by excitation of the electromagnet so as to connect the rotor to the main shaft 2.

The operating principle of the clutch is conventional per se and therefore not described in detail; in this case also engagement/disengagement of the clutch transmits the motive power to the main shaft or prevents transmission of the motive power back to the belt of the combustion engine.

## Claims

1. Apparatus for transmitting motive power from a combustion engine (M) or from an electric generator/motor (60) to a driven shaft (5) coupled to a rotating device (50), **characterized in that** it comprises a main shaft (2), the opposite ends of which are respectively connected to the combustion engine (M) by means of a first engaging/disengaging device (100; 1100) and to the driven shaft (5) by means of a second engaging/disengaging device (300), said shaft (2) having, mounted thereon, a first electromagnetic clutch (200), the rotor (220) of which is able to receive motive power from a secondary shaft (6) which is connected to the motor/generator (60), the main shaft (2) being provided with a pulley (3) carrying a drive belt (3a) which is endlessly wound onto a second pulley (4) mounted idle on said secondary shaft (6) and able to transmit motive power to the generator/motor (60) via an engaging/disengaging device (400).

2. Apparatus according to Claim 1, **characterized in that** said main shaft (2) is mounted on a bearing (2a) rigidly coupled with a fixed structure (10).

3. Apparatus according to Claim 1, **characterized in that** said secondary shaft (6) is parallel to the main shaft (2).

4. Apparatus according to Claim 1, **characterized in that** said secondary shaft (6) is mounted on a bearing (410a) rigidly coupled with the fixed structure (10).

5. Apparatus according to Claim 1, **characterized in that** said first engaging/disengaging device (100) is a free release device.

6. Apparatus according to Claim 5, **characterized in that** said free release device comprises an outer ring (121) carrying a pulley (120) and a free wheel (122) arranged between the outer ring (121) and the main shaft (2).

7. Apparatus according to Claim 6, **characterized in that** the combustion engine (M) is connected to the shaft (2) via a belt (1) endlessly wound onto said pulley (120) of the free release mechanism (100).

8. Apparatus according to Claim 1, **characterized in that** said first coupling is an electromagnetic clutch (1120).

9. Apparatus according to Claim 7, **characterized in that** said electromagnetic clutch (1120) comprises an electromagnet (1110), a rotor (1121) integral with a pulley (1120) actuated by a belt (1) of the combustion engine (M), and an armature (1122) which is able to be axially recalled by excitation of the electromagnet.

10. Apparatus according to Claim 1, **characterized in that** said first electromagnetic clutch (200) is arranged between the first and the second engaging/disengaging devices of the main shaft (2).

11. Apparatus according to Claim 1, **characterized in that** said first electromagnetic clutch (200) comprises a fixed electromagnet (210), a pulley (220) concentric with the electromagnet (210) and forming the rotor of the clutch, and an armature (230) connected via a resilient membrane (231) to a third pulley (3) rotationally locked with the shaft (2).

12. Apparatus according to Claim 11, **characterized in that** said pulley/rotor (220) is connected, via a belt (201), to a pulley (6b) formed on said secondary shaft (6).

13. Apparatus according to Claim 8, **characterized in that** the pulley (6b) of the shaft (6) operated by the electric motor (60) and the pulley (220) mounted on the main shaft (2) form a reduction gear.

14. Apparatus according to Claim 1, **characterized in that** the main shaft (2) has, mounted thereon, a pulley (3) which carries a belt (3a) endlessly wound onto a pulley (4) mounted on a bearing (4a) keyed onto said secondary shaft (6).

15. Apparatus according to Claim 14, **characterized in that** said pulley (3) of the main shaft (2) is arranged after the first electromagnetic clutch (200).

16. Apparatus according to Claim 1, **characterized in that** said second engaging device is an ON/OFF clutch (300).

17. Apparatus according to Claim 16, **characterized in that** said ON/OFF clutch is of the electromagnetic type.

18. Apparatus according to Claim 17, **characterized in that** said clutch (300) of the electromagnetic type comprises a fixed electromagnet (310), a rotor (320) connected to the main shaft (2), and an armature (330) connected to a disk (340) via a resilient membrane (330a).

19. Apparatus according to Claim 1, **characterized in that** said engaging/disengaging device arranged between the secondary shaft (6) and the motor/generator (60) is an electromagnetic clutch (400).

20. Apparatus according to Claim 19, **characterized in that** said electromagnetic clutch (400) comprises a rotor (420) integral with the secondary shaft (6), an annular electromagnetic (410) mounted on a bearing (410a) keyed onto the secondary shaft (6) and an armature (430) connected to the pulley (4) via a resilient membrane (430a).

21. Apparatus according to Claim 1, **characterized in that** said electric motor/generator (60) is connected to rechargeable batteries (70).

22. Apparatus according to Claim 21, **characterized in that** it comprises a control unit (1000) arranged between said batteries (70) and the control circuit of the electromagnet (410) and designed to detect when the batteries (70) are fully charged and emit a signal for disengaging the clutch (400).

23. Apparatus according to Claim 1, **characterized in that** said rotating device (50) is an air-conditioning compressor of a vehicle.
